# EUROPEAN PATENT APPLICATION

(11) **EP 1 506 942 A1**
(43) Date of publication of application: **16.02.2005**
(21) Application number: 04445081.5
(22) Date of filing: 05.08.2004
(51) Int. Cl.: C02F 1/74, C02F 1/64, C02F 1/72

(54) **Method and device for the purification of water**

(30) Priority: 11.08.2003 SE 0302187
(71) Applicant: AB BioVortex, 583 30 Linköping (SE)
(72) Inventor: Thörngren, Jan, Kenneth Wibran (SE)
(74) Representative: Berglund, Erik Wilhelm

(57) **Abstract**

Method for purification of water, where the water is held under pressure and that air as well chemicals are added and finely dispersed by means of one or several cyclones (11, 12). After the mixing the water is fed to one or several in series arranged cyclone like maturity chambers where the chemical reactions continue. Thereafter the reactions products originating from the pollutions are removed by means of one or several cyclones (20, 21).

## Description

This invention concerns a device for the purification of water. In particular the object of the invention is to improve the removal of organic and non-organic compounds, for instance iron, manganese and toxins from water, something that is required in many places. Since for instance the metals are dissolved in the water they may cause ill health for humans and animals and precipitate at many locations in the water system, and in particular in pressure tanks or outlets for the water, where the metal ions get the chance to react with the oxygen of the air. Toxins can now regularly be found in the subsoil water as a result of among other things agricultural and forestry fighting of weed, brushwood and noxious insects.

The object of the invention is to eliminate or reduce the above problem and achieve an improved and rapid purifying of water.

In accordance with the invention the above problem is solved by adding under pressure oxygen or air to the water (both the water and the air/oxygen has an increased pressure) and with a subsequent forceful stirring so that the oxygen quickly and efficiently is distributed in the water. Advantageously the stirring/mixing is carried out by means of a cyclone.

The high pressure will cause more oxygen to be dissolved in the water and the increased concentration result in correspondingly faster reactions with the metal ions in the water, that therefor precipitate faster and provide a fast purifying of the water. Through the use of cyclones for the mixing of air and water a very fast and extremely good atomizing of the air bubbles in the water take place, which provides a large contact area between air and water and thus fast dissolving of the air in the water and the chemical reactions can start quickly. Since the water in the cyclone circulates comparatively defined also the continuity in the feed of air to passing water is very good so that the air distribution in the water will be homogenous. One does thus not have to wait for instance for the molecule movements to distribute the oxygen in the water. In addition to the above phenomena one can conceive that the further increased pressures that arise in cyclones contribute to dissolving ability and reaction rate.

In all the above measures result in that the water efficiently and surprisingly fast can be purified when flowing through. The precipitated oxidation products can advantageously be filtered out by means of cyclones since for instance metal oxides are considerably heavier than water.

In an advantageous further development of the invention also flocculation agents may be added to the water in order to get for instance biological matter to be precipitated as flocculations. By using flocculation agents also these pollutions may be removed efficiently by means of cyclones. At this can also be noted that the big differences in pressure in the cyclones may be expected to result in an efficient breaking down of for instance bacteria.

In addition to or instead of adding air, dosage pumps may be arranged for the adding of chemicals, for instance flocculation agent that is distributed efficiently by the mixing cyclone or cyclones. The added chemicals may also include oxygen releasing substances as for instance potassium permanganate.

After the adding of air and/or chemicals and mixing thereof the water is advantageously forwarded to maturation chambers in the shape of for instance cyclones or cyclone like vessels with a tangential inlet, that give a long and well defined travel path of the water so that one with a comparatively good certainty knows that all water has taken this path and that the available reaction time for each little part water volume is the same. This makes the use of long pipes or large tanks with a great retention time unneeded in order to ascertain that reaction takes place. Since the reaction products mostly are heavier than the water they drift towards the sides of the cyclone and the flocculation is facilitated since there is an enrichment at the sides of the cyclone or vessel. In the cases where the reaction products are colloidal advantageously some kind of filter is used for the separation.

Since the essential object of these maturation chambers in the shape of for instance cyclones is to provide an extended reaction time they do not need to be so steeply tapering downwards but only so that the swirling is maintained to a sufficient extent.

In the end the precipitated material is isolated by means of one or several separating cyclones.

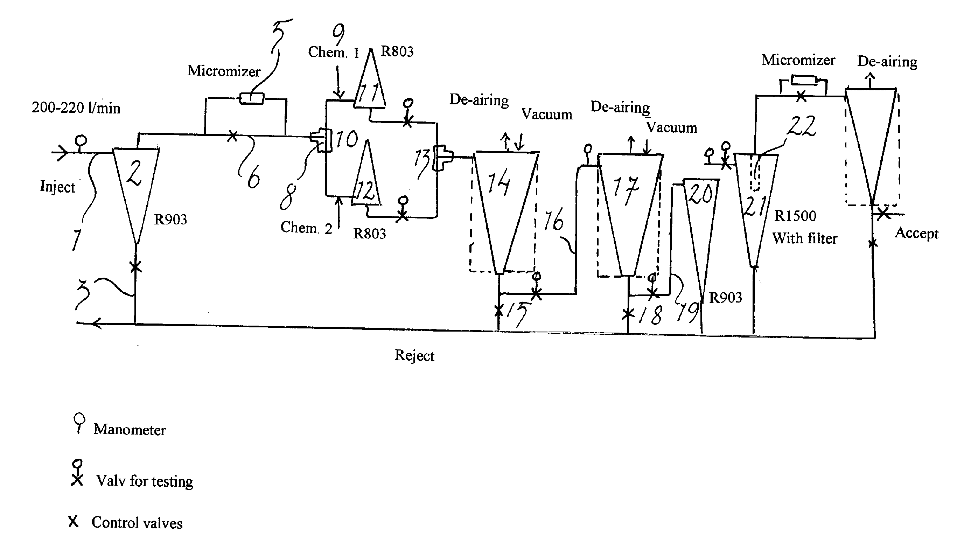

Further advantages and characteristics of the invention are apparent from the claims and the following description of a preferred embodiment of the invention that is also shown in the enclosed drawing.

The purification installation for water shown in the drawing comprise in a first step a cyclone 2 to which water is fed under pressure from a not shown pump via an inlet conduit. The water is in the cyclone 2 brought to swirl in the usual way so that pollutions heavier than the water by the centrifugal force is thrown out against the walls of the cyclone finally to be released via a lower control valve provided outlet 4 for discharge, in some cases back to the place from which the water is taken, for instance a river or the like.

From the central upper outlet from the cyclone water is fed to an air feed device 5 for the adding of air to the water by means of a compressor, air nozzle or the like. The compressor is preferably so controlled that the amount of air that is squeezed into the water is proportional to the water flowing through. In parallel with the oxygenizing device 5 a control device 6 is arranged, enabling, if so desired, a reduction of the oxygenizing. The water is the distributed 8 to two dosage devices 9 and 10 respectively in which a continuous adding of chemicals can take place, for instance by means of stainless cog wheel pumps that are capable of squeezing in the chemicals against the water pressure in the plant. After the pumping in of the chemicals the water with chemicals and oxygen continue to two inverted cyclones and 12 the tips of which are directed upwards, the inlet is as usually tangential but water is only taken out centrally in the wider end of the cyclone. The water will thus swirl around very fiercely in theses cyclones before it flows out therefrom. In this way these cyclones will function as mixing chambers so that the oxygen is dissolved and atomized in the water as well as the chemicals, which in turn mean that oxygen and chemicals can come in contact with the metal ions or other substances that one wish to oxidize, then to remove from the water.

Since the pressure is increased the reactions take place more quickly than otherwise. the outlet water from the cyclones 11 and 12 is collected 13 and fed to a cyclone like maturation chamber 14, from which the water is taken out downwards. In this maturation chamber a continued mixing takes place at the same time as the products of the different added chemicals and the oxygen in the air react and flocculate contaminations out from the water. An enrichment of the reaction products take place at the sides of the maturation chamber, which makes it possible for the reaction products to react with each other more easily. The maturation chamber 14 thus provide a possibility for the reactions to continue during the successive feeding of the water in helices on to the outlet at the same time as stimulating flocculation. From the lower pointed end of the flocculation chamber 14 the water is headed on to an additional maturation chamber 17 with the same function as the maturation chamber 14. The outlets from the two maturation chambers 14 and 17 are provided with control valves 15 and 18 in order, if desired, to let out water with associated contaminations directly in the outlet 4, for instance for flushing.

From the maturation chamber 17 the water flow via a conduit 19 on to a purifying cyclone 20 where the flocculated or agglomerated contaminations are separated and let out downwards in the pointed end of the cyclone and released into the outflow (alternatively being collected for further treatment or recovery) while the purified water is diverted upwards from the outlet placed in the wider end of the cyclone. The pure water is then headed on to an additional purifying cyclone that is arranged in a similar way but where a filter has been arranged in the outlet end of the cyclone.

The water purified as described above is very pure and can in most cases be used for drinking. If so is desired one or several of the steps in the described device can be repeated and one can for instance consider a renewed oxygenizing.

The cyclone like maturation chambers 13 and 17 serve as reaction chambers and may possibly be exchanged for other types of reaction chambers. As for the cyclones 14 and 17 it should be mentioned that these are provided with venting valves centrally in their upper ends so that if sub-pressure would arise in the cyclones due to the intense swirling there is no risk of sub-pressures and instead air is let in.

As flocculation agents different agents may be used. Advantageously bio-polymers on aluminum or silicon base can be used giving flocculations that are heavier than water and therefor separatable by means of cyclones. As apparent from the drawing manometers and sampling valves are arranged on a number of locations in the plant in order to enable running in of this according to prevailing conditions as well as sampling of the result and the purification of the plant.

Since the plant according to the invention to a great extent reduce the need of membrane filter or sand beds the amount of consumables that has to be taken care of becomes almost nonexistent and the plant can be made very compact and easy to move. Some pollutions can further be expected to be delivered in a sufficiently pure form to allow extraction and reuse of the consistuent substances.

By varying the adding of air and chemicals respectively and the flow conditions an installation in accordance with the invention can be adapted to varying water qualities and demands on the delivered water. One can also consider the taping of water with different degree of purification from different locations in the installation and for different purposes.

Advantageously the device according to the invention is built in the shape of modules for adaption to respective location of use. One can also at smaller amounts flowing through consider using only one cyclone for the admixing of air as well as chemicals. When needed different steps may be repeated for the obtaining of intended degree of purification, alternatively be coupled in parallel in order to achieve sufficient flow through volumes.

## Claims

1. Method for the purification of water, **characterized in that** oxygen is added to the water that then under pressure is stirred, whereafter resulting precipitations are isolated.

2. Method for the purification of water, **characterized in that** chemicals, for instance flocculating agents or oxygen emitting materials as potassium permanganate is added to the water that is then stirred.

3. Method according to claim 1 or 3, **characterized in that** the stirring is achieved with one or several cyclones.

4. Method according to claim 1, 2 or 3, **characterized in that** one or several flocculation agents are used binding pollutions in the water and that one or several cyclones are used for the isolation of said reaction products.

5. Method according to any of the preceding claims, characterized n that the water after the mixing in order to extend the available reaction time is brought through additionally one or several cyclones or cyclone like flow through vessels.

6. Device for the carrying out of a method in accordance with one or several of the claims 1-5 **characterized in that** it include means for pumping air or oxygen into the water, a cyclone arranged after this for the mixing of air and water.

7. Device according to claim 6, **characterized in that** a dosage device for chemicals is arranged upstream of a mixing cyclone.

8. Device according to claim 5, 6 or 7, **characterized in that** after the mixing cyclone further cyclones are arranged to provide an extended reaction time for oxygen, chemicals and pollutions.
